# EUROPÄISCHE PATENTSCHRIFT

(11) **EP 3 464 968 B1**
(45) Veröffentlichungstag und Bekanntmachung des Hinweises auf die Patenterteilung: **19.05.2021**
(21) Anmeldenummer: 17719496.6
(22) Anmeldetag: 30.03.2017
(51) Int. Cl.: F16K 11/07, F16K 27/04, F16K 31/06, F15B 13/044

(54) **ELEKTROMAGNETISCHE VENTILVORRICHTUNG UND SYSTEM**
ELECTROMAGNETIC VALVE DEVICE AND SYSTEM
DISPOSITIF SOUPAPE ÉLECTROMAGNÉTIQUE ET SYSTÈME

(30) Priorität: 30.05.2016 DE 102016109865
(43) Veröffentlichungstag der Anmeldung: 10.04.2019
(73) Patentinhaber: ETO MAGNETIC GmbH, 78333 Stockach (DE)
(72) Erfinder: PYZA, Andrzej, 55-003 Chrzastawa Wielka (PL); NIEWEGLOWSKI, Marcin, 58-506 Jelenia Góra (PL); FEINDLER, Michael, 78333 Stockach (DE)
(74) Vertreter: Patent- und Rechtsanwälte Behrmann Wagner PartG mbB
(86) Internationale Anmeldenummer: PCT/EP2017/057622
(87) Internationale Veröffentlichungsnummer: WO 2017/207130

(56) Entgegenhaltungen:
- CN-A- 103 277 534
- DE-A1- 10 213 554
- US-A1- 2008 308 757
- US-A1- 2014 239 211

## Beschreibung

Die vorliegende Erfindung betrifft eine elektromagnetische Ventilvorrichtung nach dem Oberbegriff des Hautpanspruchs. Ferner betrifft die vorliegende Erfindung ein System aufweisend eine derartige elektromagnetische Ventilvorrichtung.

Elektromagnetische Aktoren, bei welchen eine als Reaktion auf eine Bestromung stationärer Spulenmittel relativ zu stationären Kernmitteln bewegbare Ankereinheit eine Ventilschiebereinheit antreibt und, entsprechend einer jeweiligen Stellposition, die Ventilfunktionalität bewirkt, sind aus dem Stand der Technik allgemein bekannt. Nicht zuletzt aufgrund ihrer einfachen konstruktiven Realisierung, ihrer großserientauglichen Fertigbarkeit und ihrer mechanischen Zuverlässigkeit sind daher gattungsgemäße Ventilvorrichtungen für eine große Vielzahl von Anwendungen gängig. Dabei sind Verwendungen im Zusammenhang mit dem Schalten von Fluid in einem Fahrzeug- bzw. automotiven Kontext bevorzugt, jedoch ist der Einsatz nicht auf dieses technische Gebiet beschränkt.

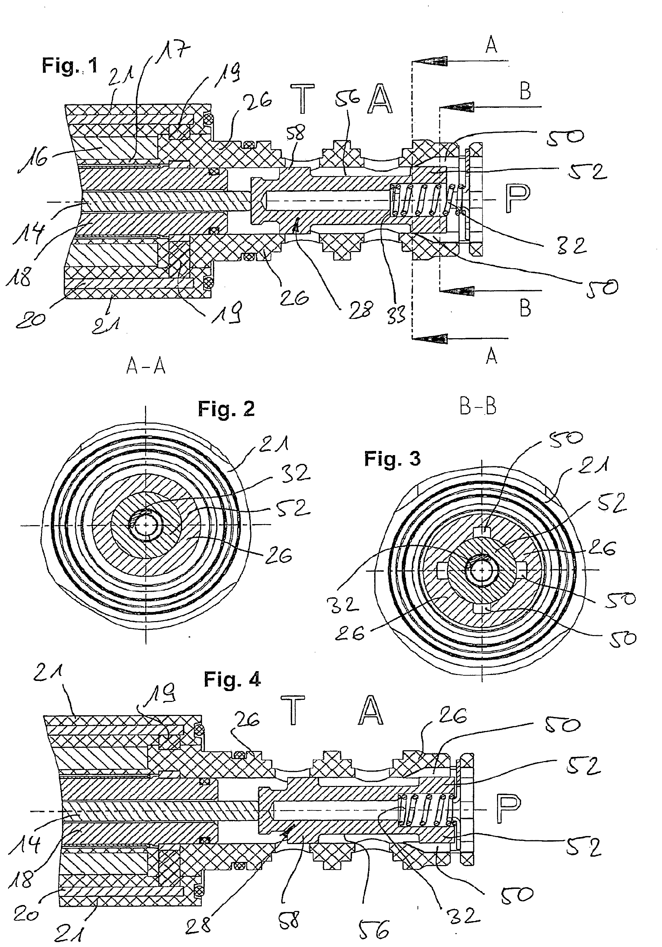

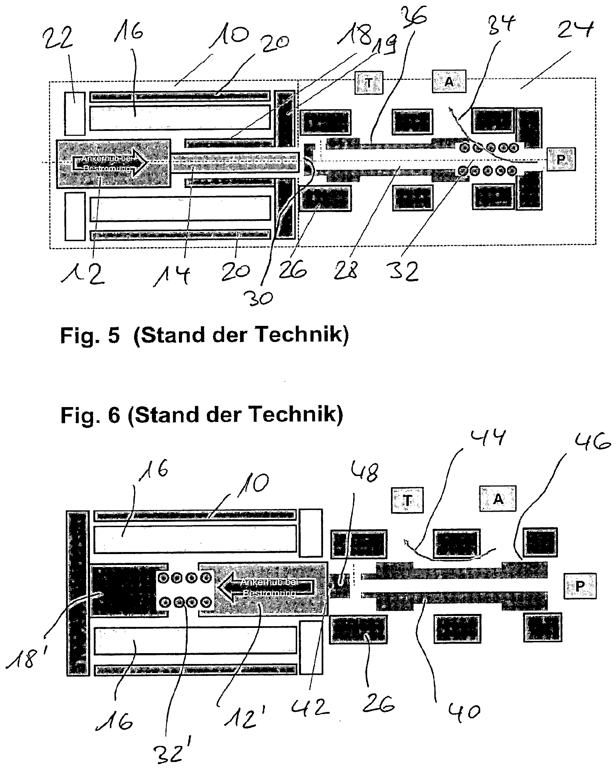

Die Fig. 5 zum Stand der Technik verdeutlicht in der Art einer schematischen Längsschnittansicht den prinzipiellen Aufbau einer (weitgehend radialsymmetrisch um eine sich horizontal erstreckende Längsachse realisierten) Ventilvorrichtung gemäß Oberbegriff. So weist eine bevorzugt modulartig aufgebaute Aktorbaugruppe 10, in der Ansicht der Fig. 5 umrandet von der linksseitig gezeigten gestrichelten Linie, Ankermittel auf, welche einen Ankerkörper 12 und einen daran fest ansitzenden, im Durchmesser verringerten Ankerstößel 14 aufweisen. Diese Ankermittel sind entlang der axialen Richtung (d.h. entlang der horizontal verlaufenden Symmetrielinie in Fig. 1) aus der in Fig. 5 gezeigten zurückgezogenen bzw. eingeschobenen Ankerposition durch Bestromung einer stationären Spuleneinheit 16 in eine ausgeschobene Position (in Richtung nach rechts in der Fig. 5) bewegbar, wobei ein elektromagnetisch erzeugter Flusskreis für diese Ankerbewegung von einem Anker- bzw. Jochabschnitt 18, einem mantelseitigen, magnetisch leitenden Gehäuseabschnitt 20 sowie einem linksseitig-stirnseitigen Deckel- bzw. Jochabschnitt 22 geschlossen wird, so dass entlang Pfeilrichtung in Fig. 5 die Aktorbewegung bei der Bestromung erfolgt.

Diese modulartige Aktoreinheit 10 wirkt zusammen mit einer die Ventil-Fluidanschlüsse P (als typischen Druckanschluss), A (als Arbeitsanschluss) sowie T (als Belüftungsanschluss) ausbildenden Ventilgehäuseeinheit 24 (symbolisch durch die rechtsseitige gestrichelte Umrandung in der Fig. 5 gezeigt), in welcher die Anschlüsse P, A sowie T als Öffnungen in einem polymeren, sich entlang der axialen Richtung langgestreckten Ventilgehäuse 26 gebildet sind. Im Inneren dieses Ventilgehäuses 26 ist eine Ventilschieberbaugruppe 28 axial bewegbar geführt, welche sich an einem linksseitigen Ende 30 (Stirnfläche) von einer äußeren Stirnfläche des Ankerstößelabschnitts 14 berührend abstößt, ohne dass die Baugruppen 14 und 28 fest miteinander verbunden sind. Eine im rechtsseitigen Endbereich der Ventilschieberbaugruppe 28 vorgesehene und sich von einem stirnseitigen Endbereich (im Bereich des Druckanschlusses P) abstoßende Druckfeder 32 spannt die Ventilschieberbaugruppe 28 gegen die Ankermittel 12, 14 (genauer: gegen die endseitige Stirnfläche des Ankerstößelabschnitts 14) vor.

Auf die so aufgebaute und schematisch in Fig. 5 gezeigte Weise ist ein 3/2-Ventil realisiert, nämlich ein Ventil, bei welchem durch Bewegung der Ankermittel 12, 14 und entsprechend Antreiben der Ventilschieberbaugruppe 28 zwei Stellpositionen (alternativ bzw. in Weiterbildung auch in der Art eines Proportionalventils geeignete Zwischenpositionen) stell- bzw. ansteuerbar sind, und wobei die gezeigte Technologie zum Stand der Technik gemäß Fig. 5 einen sogenannten stromlos offenen Zustand darstellt, nämlich einen geöffneten Fluidkanal zwischen dem stirnseitig am Ventilgehäuse vorgesehenen (ersten) Fluidanschluss P und dem benachbarten, mantelseitig am Ventilgehäuse 26 vorgesehenen (zweiten) Fluidanschluss als Arbeitsanschluss A; der gebogene Pfeil 34 symbolisiert diesen im dargestellten unbestromten Zustand der Spulenmittel 16 geöffneten Fluidpfad 34.

Das gezeigte Ventil weist drei Fluidanschlüsse auf; neben den bereits diskutierten und den (ersten) Fluidpfad 34 ausbildenden Anschlüssen P und A ist ein dritter, axial dem Arbeitsanschluss (zweiten Fluidanschluss) in Richtung auf die Aktoreinheit 10 benachbart vorgesehener dritter Fluidanschluss, hier als Entlüftungsanschluss T, vorgesehen, welcher durch geeignete Ausbildung bzw. Profilierung der Ventilschieberbaugruppe im Betriebszustand der Fig. 5 (unbestromte Spuleneinheit, damit Fluidpfad 34 P-A geöffnet) den weiteren Fluidpfad A-T verschließt. Dagegen würde, bei erfolgter Bestromung der Spulenmittel 16 und dadurch bewirkter Rechtsbewegung der Ankermittel 12, 14 und mithin der Mitnahme der Ventilschieberbaugruppe 28 nach rechts gegen die Rückstellwirkung der Druckfeder 32, eine Vertiefung bzw. Ausnehmung 36 mantelseitig an der Ventilschieberbaugruppe so positioniert, dass beim Verschließen des ersten Fluidpfades (Pfeilrichtung 34 unterbrochen) statt dessen eine Fluidkommunikation zwischen A und T ermöglicht ist.

Entsprechend wird die in Fig. 5 gezeigte Technologie auch als stromlos geöffnete (NO = normally open) Ventilausbildung, bezogen auf P-A, bezeichnet.

Während sich eine derartige, in Fig. 5 schematisch gezeigte Technologie in der Alltagspraxis bewährt hat und in zahlreichen technischen Anwendungsgebieten Einsatz findet, ist es gleichwohl häufig auch bevorzugt, eine elektromagnetische Ventilvorrichtung nicht, wie in der Fig. 5, als stromlos offen (NO) auszubilden, häufig ist es von Vorteil, etwa um einen Ventil-Sperrzustand für den Fall eines Stromausfalls oder dergleichen sicherzustellen, ein Elektromagnetventil der gezeigten Art, insbesondere als 3/2-Ventil, stromlos geschlossen (NC = normally closed) auszugestalten, derart, dass eine stromlose (und etwa durch angreifende Federmittel definierte) Ankerposition den Fluidpfad P-A verschließt.

Allerdings lässt sich mit der in Fig. 5 gezeigten prinzipiellen Geometrie eine stromlos geschlossene (NC) Ventiltopologie nicht ohne weiteres realisieren. Vielmehr ist hierfür eine Modifikation insbesondere der Aktorbaugruppe erforderlich, wie dies in Fig. 6 ebenso schematisch gezeigt ist; es wird für die weitere Diskussion davon ausgegangen, dass auch die Realisierung gemäß Fig. 6 prinzipiell bekannt ist. Bei der weiteren Diskussion, insbesondere auch für die spätere Beschreibung von Ausführungsbeispielen der Erfindung, gelten gleiche Bezugszeichen für gleiche bzw. funktional äquivalente Baugruppen bzw. Funktionselemente.

In der Fig. 6 ist die Aktorbaugruppe realisiert durch einen Ankerkörper 12', welcher als Reaktion auf die Bestromung der Spulenmittel 16 in Richtung auf eine linksseitige Kerneinheit 18' angezogen wird, wobei eine zwischen dem Ankerkörper 12' und dem stationären Kern 18' vorgesehen Druckfeder 32' bei der Bestromung und der damit bewirkten (nach links entsprechend dem Pfeil in Fig. 6 gezeigten) Bewegung der Ankereinheit 12' komprimiert wird.

Eine Ventilschieberbaugruppe 40 sitzt mit ihrem linksseitigen Endabschnitt 48 an einer Verbindungsstelle 42 fest (z.B. durch Verkleben oder eine andere feste Verbindungstechnik) an einer an Fig. 6 rechtsseitig gezeigten Stirnfläche des Ankerkörpers 12, so dass bei der durch Bestromung bewirkten entsprechend Pfeilrichtung links gerichteten Bewegung des Ankers die Ventilschieberbaugruppe 40 entsprechend nach links mitgenommen wird. Der unbestromte Zustand ist in der Fig. 6 gezeigt; während ein Fluidpfad 44 A-T geöffnet ist, ist, symbolisch gezeigt durch das Bezugszeichen 46, eine Fluidkommunikation P-A gesperrt. Das Bestromen der Spulenmittel 16 und das darauf folgende Bewegen des Ankers 12' in Richtung nach links öffnet an der Position 46 den Fluidpfad P-A, während gleichzeitig durch den rechtsseitigen (verdickten) Endbereich der Ventilschieberbaugruppe 40, 42 der Fluidpfad A-T (Pfeil 44) versperrt wird.

Während auch eine derartige technische Realisierung verbreitet und bewährt ist, stellt doch insbesondere die Realisierung der Aktorbaugruppe für eine NC-Konfiguration (Fig. 6) gegenüber der NO-Konfiguration (Fig. 5) einen großen konstruktiven Abstand dar, so dass insbesondere eine flexible Anpassung oder Umstellung der Elektromagnetventile von NO auf NC oder umgekehrt im Wege einer Produktion schwierig bzw. unmöglich ist; es müssten jedes Mal die Aktorbaugruppen geändert werden, wobei im Fall der NC-Konfiguration gemäß Fig. 6 als zusätzliches Problem hinzu kommt, dass die notwendige und auch auf Zug belastbare Verbindung zwischen den Ankermitteln der Ventilschieberbaugruppe fest sein muss, also etwa ein gesonderter Verbindungs- (Klebe-)Vorgang erforderlich ist, welcher zudem, etwa im Fall von Vibrationsbelastungen oder dergleichen, störungs- und beschädigungsempfindlich ist. Auch ist es aus magnetischen bzw. Hysterese Gründen generell sinnvoll bzw. vorteilhaft, die Ankermittel von der Ventilschieberbaugruppe mechanisch zu entkoppeln, insbesondere wenn diese aus magnetisch relevantem Material realisiert ist.

Aus dem Stand der Technik sind die Druckschriften DE 102 13 554 A1 sowie die US 2014/0 239 211 A1 vorbekannt. Ferner sind noch die US 2008/308757 A1 sowie die CN 103 277 534 A zu nennen.

Aufgabe der vorliegenden Erfindung ist es daher, eine elektromagnetische Ventilvorrichtung nach dem Oberbegriff des Hauptanspruchs so auszugestalten weiterzubilden, dass insbesondere unter weitgehender Beibehaltung der Aktorrealisierung in einem Aktorgehäuse mit geringem zusätzlichen Aufwand für Ventilgehäuse bzw. Ventilschieber eine Umrüstung bzw. Produktionsumstellung von einer für einen stromlos offenen Betrieb geeigneten Ventilvorrichtung auf eine für einen stromlos geschlossenen Betrieb geeignete elektromagnetische Ventilvorrichtung ermöglicht ist. Dabei soll insbesondere ein Anteil von Gleichteilen erhöht werden, und es soll weiter bevorzugt eine kostengünstige, automatisierbare Fertigung ermöglicht sein.

Die Aufgabe wird durch die elektromagnetische Ventilvorrichtung mit den Merkmalen des Hauptanspruchs gelöst; vorteilhafte Weiterbildungen der Erfindung sind in den Unteransprüchen beschrieben.

In erfindungsgemäß vorteilhafter Weise ist dabei das Ventilgehäuse zum Zusammenwirken mit der darin geführten Ventilschieberbaugruppe mit mindestens einem axial flussleitenden Kanalabschnitt versehen, der so ausgebildeten ist, dass in der der eingeschobenen bzw. zurückgezogenen Ankerposition entsprechenden axialen Position der Ventilschieberbaugruppe - diese ist erfindungsgemäß nicht fest und zugbelastbar mit den Ankermitteln verbunden, sondern wird von diesen lediglich mit Schubkraft beaufschlagt - der Fluidpfad versperrt ist, während, nach Bestromung der Spulenmittel und Herausbewegen der Ankermittel aus der eingeschobenen bzw. zurückgezogenen Ankerposition, über den mindestens einen axial fluidleitenden Kanalabschnitt der Fluidpfad vom ersten Fluidanschluss (bevorzugt P) vom zweiten Fluidanschluss (bevorzugt A) geöffnet ist.

Damit ist erfindungsgemäß vorteilhaft realisiert, dass, konstruktiv einfach und unter praktisch unveränderter Nutzbarkeit einer Aktoreinheit der in Fig. 5 gezeigten Art, lediglich durch Druckbeaufschlagung auf einen lösbar aufsitzenden Ventilschieber eine NC-Funktionalität bewirkbar ist, nämlich dadurch, dass im unbestromten Zustand im Zusammenwirken zwischen Ventilschieberbaugruppe und umgebendem Abschnitt des Ventilgehäuses der erfindungsgemäße Kanalabschnitt geschlossen und entsprechend der Fluidpfad gesperrt ist, während ein durch Bestromung bewirktes Herausfahren der Ankereinheit und entsprechend ein druckbeauftragtes Mitnehmen der Ventilschieberbaugruppe diesen mindestens einen Kanalabschnitt so öffnet bzw. freilegt, dass dadurch der Fluidfluss ermöglicht ist.

Dabei ist im Rahmen der Erfindung der flussleitende Kanalabschnitt in Mehrzahl vorgesehen, weiter bevorzugt und bei weitgehend radialsymmetrischer Ausgestaltung insbesondere am betreffenden Ende des Ventilgehäuses bzw. der Ventilschieberbaugruppe, ein derartiger Kanalabschnitt in Mehrzahl um den Innenumfang des Gehäuseabschnitts herum angeordnet, so dass auch mit geringem Strömungswiderstand der Fluidpfad durch die Summe der einzelnen Kanalabschnitte realisiert ist Erfindungsgemäß sind die Einzelkanalabschnitte in Richtung auf die Ankermittel längsschnittlich spitz zulaufend im Ventilgehäuse eingeformt.

Auch ist es im Rahmen bevorzugter Weiterbildungen der Erfindung vorteilhaft, den ersten Fluidanschluss vorteilhaft weiterbildend als Druckanschluss vorgesehen, stirnseitig des Ventilgehäuses und damit bevorzugt entlang der axialen Richtung vorzusehen, während der zweite Fluidanschluss (ggf. weitere Fluidanschlüsse) an einem seitlichen Gehäusebereich, insbesondere einem Mantelbereich, des Ventilgehäuses vorgesehen sind. Damit ist es dann geometrisch ermöglicht, dass der erfindungsgemäße fluidleitende Kanalabschnitt des Ventilgehäuses, sich zumindest abschnittsweise entlang der axialen Richtung bzw. parallel zu dieser erstreckend, zwischen dem ersten und dem zweiten Fluidanschluss (wiederum entlang der axialen Richtung) liegt.

Besonders bevorzugt ist es ferner, wenn bei einer Ausführungsform der elektromagnetischen Ventilvorrichtung Kraftspeichermittel auf die Ventilschieberbaugruppe und/oder die Ankermittel so wirken, dass eine rückstellende Kraft in die eingeschobene bzw. zurückgezogene Ankerposition entsteht; besonders vorteilhaft geschieht dies durch Ausgestaltung der weiterbildenden Kraftspeichermittel als Druckfeder, welche zusätzlich vorteilhaft und weiterbildend etwa stirnseitig und/oder in einem zu den Ankermitteln entgegengesetzten axialen Endbereich der Ventilschieberbaugruppe angreifen, wobei es dann wiederum vorteilhaft ist, eine derartige Druckfeder anderenends von einem entsprechenden Abschnitt bzw. Widerlager des Ventilgehäuses abzustützen.

Besonders bevorzugt ist die Realisierung der vorliegenden Erfindung als 3/2-Ventil, entweder als Schalt- oder Proportionalventil, wobei zu diesem Zwecke ein weiterer (dritter) Anschluss bevorzugt vorgesehen ist, welcher weiter bevorzugt in einem seitlichen Bereich des Ventilgehäuses, benachbart dem zweiten Fluidanschluss in Richtung auf die Ankermittel, vorgesehen ist. Durch geeignete Ausgestaltung insbesondere der Ventilschieberbaugruppe lässt sich dabei eine Funktionalität dergestalt erzeugen, dass bei der den Fluidpfad zwischen dem ersten und dem zweiten Fluidanschluss sperrenden axialen Position der Ventilschieberbaugruppe (also im unbestromten Zustand) die Ventilschieberbaugruppe einen weiteren Fluidpfad von dem zweiten zum zusätzlichen dritten Fluidpfad öffnet bzw. freigibt. Dagegen würde die Ventilschieberbaugruppe (durch entsprechende Ein- bzw. Ausformung) so ausgebildet sein, dass bei einer Bestromung und Bewegung der Ankermittel aus der zurückgezogenen Position mit dem Öffnen des Fluidpfades zwischen dem ersten und dem zweiten Fluidanschluss der weitere Fluidpfad (zweiter zum dritten Fluidanschluss) versperrt wird. Diese Funktionalität kann sowohl als Schalt-, als auch als Proportionalventil realisiert sein, wobei dies i.Ü. auch für die prinzipiell mögliche Realisierung der Erfindung 2/2-Ventil, also lediglich mit dem ersten und dem zweiten Fluidanschluss, ermöglicht ist.

Die durch die vorliegende Erfindung erreichte weitgehend unveränderte Geometrie in der Gestaltung der Aktorbaugruppe, welche im Rahmen bevorzugter Ausgestaltungen der Erfindung insbesondere auch als bauliche Einheit bzw. (gesondert vorsehbares und fertigbares) Modul ausgestaltet sein kann, ermöglicht nunmehr in der Art eines erfindungsgemäßen Systemgedankens, lediglich durch Austauschen bzw. Vorsehen eines für einen NO-Modus (etwa analog der Ausgestaltung gemäß Fig. 5) einen Baukasten zu schaffen, bei welchem dann, zum Wechseln von NO auf NC und umgekehrt, jeweils lediglich noch eine Ventilbaugruppe bestehend aus Ventilgehäuse und darin geführter Ventilschieberbaugruppe, auszutauschen bzw. zu montieren ist, so dass signifikante Vorteile insbesondere bei einer flexiblen (und weitgehend automatisierbaren) Serienfertigung realisiert sind.

Diese vorteilhafte Weiterbildung schließt gleichwohl nicht aus, dass auch die vorliegende Erfindung, konstruktiv günstig, etwa einen Spulenträger der erfindungsgemäß im Spulenmittel einstückig mit dem erfindungsgemäßen Ventilgehäuse ausgestaltet (dies würde dann auch gelten können für die Modifikation im Rahmen des Systems), so dass auf diese Weise dann auch Herstellungs- bzw. Werkzeugkosten vermindert werden können.

Weitere Vorteile, Merkmale und Einzelheiten der Erfindung ergeben sich aus der nachfolgenden Beschreibung bevorzugter Ausführungsbeispiele sowie anhand der Zeichnungen; diese Zeichnungen zeigen in
- Fig. 1: eine schematische Teil-Schnittansicht der elektromagnetischen Ventilvorrichtung gemäß einem ersten Ausführungsbeispiel der Erfindung in NC-Konfiguration, wobei die Fig. 1 den unbestromt-geschlossenen bzw. versperrten Zustand zeigt;
- Fig. 2: eine Querschnittsansicht entlang der Schnittlinie A-A in Fig. 1;
- Fig. 3: eine Querschnittsansicht entlang der Schnittlinie B-B in Fig. 1;
- Fig. 4: eine Längsschnittansicht analog Fig. 1, jedoch im bestromten Zustand der Spulenmittel und damit in aus der eingeschobenen bzw. zurückgezogenen Ankerposition (in Richtung nach rechts vorgeschobenen Ankerposition) zum Öffnen des Fluidpfades P-A;
- Fig. 5: eine Schemadarstellung einer als bekannt vorausgesetzten elektromagnetischen Ventilvorrichtung in NO-Topologie nach dem Stand der Technik und
- Fig. 6: in schematischer Längsschnittansicht analog Fig. 5 eine als aus dem Stand der Technik bekannt vorausgesetzte elektromagnetische Ventilvorrichtung in NC-Topologie nach dem Stand der Technik.

Das Ausführungsbeispiel der Fig. 1-4 verdeutlicht eine Möglichkeit, den Erfindungsgedanken umzusetzen; wiederum entsprechen die in den Fig. 1-4 verwendeten Bezugszeichen, soweit identisch mit Fig. 5, Fig. 6, identischen bzw. funktional vergleichbaren Baugruppen.

So sind die (lediglich in Form des Stößels 14 gezeigten) Ankermittel in einem umgebenden stationären Kernabschnitt 18 geführt, welcher wiederum magnetisch flussleitend mit einem Jochabschnitt 19 sowie einer umgebenden Gehäuseschale 20 in Verbindung steht. Eine Spulenwicklung 16 ist auf einem (Kunststoff-)Spulenträger 17 gehalten, welcher beim gezeigten Ausführungsbeispiel einstückig übergeht in ein Ventilgehäuse 26, welches sich, im Inneren hohlzylindrisch ausgebildet, koaxial zur horizontal verlaufenden Symmetrie- bzw. Längsachse erstreckt, stirnseitig zum Realisieren des ersten Fluidanschlusses P und mantelseitig für den zweiten (A) bzw. dritten (T) Fluidanschluss geöffnet ist. Eine Ventilschieberbaugruppe 28, locker aufsitzend auf dem freien Ende des Ankerstößels 14, gegen die Bewegungsrichtung der Ankermittel vorspannend, ist im rechtsseitigen Innenbereich der Ankerstößelbaugruppe eine Druckfeder 32 ausgebildet, welche sich im rechtsseitigen Ende vom Ventilgehäuse 26, linksseitig von einem im Inneren der Ventilschieberbaugruppe gebildeten Ringabsatz 33 abstützt.

Im rechtsseitigen Bereich der Figurenebene weist das Ventilgehäuse 26 vier entlang des Innenumfangs verteilt angeordnete Kanalabschnitte 50 auf, welche in das Kunststoffmaterial des Ventilgehäuses 26, in Richtung auf die Ankermittel längsschnittlich spitz zulaufend, eingeformt sind. Dabei ist ein Endabschnitt 52 der Ventilschieberbaugruppe 28 zylindrisch so ausgebildet, dass er, im Betriebszustand der Fig. 1 (unbestromte Spulenmittel 16, damit eingeschobener Betriebszustand der Ankermittel) den Fluidpfad P-A versperrt, der Kanalabschnitt 50 liegt in dieser Relativstellung des Abschnitts 52 nicht frei, während demgegenüber der bestromte Betriebszustand der Ventilvorrichtung gemäß Fig. 4 (ausgefahrener Zustand der Ankermittel, damit nach rechts mitgenommener bzw. verschobener Positionszustand der Ventilschiebereinheit 28) der Abschnitt 52 die Kanalabschnitte 50 zum Arbeitsanschluss A öffnet bzw. freilegt, so dass durch den Druckanschluss P und die Kanalabschnitte 50 zum ersten Fluidanschluss A eine (im bestromten Zustand geöffnete) Fluidkommunikation ermöglicht ist.

Parallel wird deutlich, dass eine an der Ventilschiebereinheit im mittleren Mantelbereich vorgesehene mantelseitige Vertiefung 56 den Fluidfluss zwischen A (zweiter Fluidanschluss) und P (dritter Fluidanschluss) beeinflusst: im Betriebszustand der Fig. 1, NC für A-P, ist die Kommunikation A-P geöffnet, während im bestromten Zustand, A-P geöffnet, die Ventilschieberbaugruppe mit einem linksseitigen zylindrischen Dichtabschnitt 58 eine Fluidkommunikation A-T versperrt (Fig. 4). Ein Beenden der Bestromung bewirkt mittels der Spiralfeder 32 ein Zurückführen der Ventilschieberbaugruppe 28 bzw. der Ankermittel zurück in die eingeschobene, zurückgezogene Betriebsposition der Fig. 1.

Es wird deutlich, dass es keiner festen, auf Zug belastbaren Verbindung etwa zwischen dem Ankerstößel 14 und der Ventilschieberbaugruppe 28 bedarf, vielmehr ist diese Funktionalität ausschließlich durch den Vorschub der Ankereinheit 14 bzw. das Rückstellen mittels der Federmittel 32 bewirkt.

Zusätzlich vorteilhaft ist durch diese Ausbildung ermöglicht, dass durch einfaches Austauschen des Ventilgehäuses 26 die im Ausführungsbeispiel der Fig. 1-4 gezeigte NC-Topologie des Elektromagnetventils geändert werden kann in eine analog der Schemadarstellung der Fig. 5 aufgebaute NO-Elektromagnetventiltopologie. Insbesondere der prinzipielle Aufbau der elektromagnetischen Aktorik bleibt unverändert, wobei zusätzlich weiterbildend es insbesondere auch möglich ist, anstelle der im Ausführungsbeispiel der Fig. 1-4 gezeigten Einstückigkeit von Spulenträger (17) und Ventilgehäuse 26 hier getrennte Baugruppen vorzusehen, so dass insbesondere auch das vollständige Aktorgehäuse (welches im Ausführungsbeispiel der Fig. 1-4 eine Kunststoff-Umspritzung 21 der metallischen Gehäusebaugruppe 20 vorsieht) modulartig bzw. als bauliche Einheit getrennt vorgesehen und dann mit einer geeigneten Ventilgehäusetechnologie mit geeignet einsitzendem Ventilschieber kombiniert werden kann.

## Patentansprüche

1. Elektromagnetische Ventilvorrichtung mit
zur Betätigung einer Ventilschieberbaugruppe (28) als Reaktion auf eine Bestromung stationärer Spulenmittel (16) entlang einer axialen Richtung bewegbaren Ankermitteln (12, 14),
die zusammen mit den Spulenmitteln und stationären Kernmitteln in einem Aktorgehäuse (17, 19, 20, 22) bevorzugt als bauliche Einheit und/oder Modul aufgenommen sind und in einem unbestromten Zustand der Spulenmitteln eine eingeschobene und/oder zurückgezogene Ankerposition (Fig. 1) einnehmen,
wobei die in einem Ventilgehäuse (26) geführte Ventilschieberbaugruppe (28) axial einends zum berührenden, nicht zugbelastbaren Zusammenwirken mit den Ankermitteln (14) und so ausgebildet ist, dass in Abhängigkeit von einer axialen Position der Ventilschieberbaugruppe ein Fluidpfad von einem ersten Fluidanschluss (P) des Ventilgehäuses zu einem zweiten Fluidanschluss (A) des Ventilgehäuses geöffnet oder versperrt werden kann,
wobei das Ventilgehäuse (26) innenseitig zum Zusammenwirken mit der darin geführten Ventilschieberbaugruppe (28), insbesondere axial endseitig den Ankermitteln gegenüberliegend, mindestens einen axial fluidleitenden Kanalabschnitt (50) aufweist, der so ausgebildet ist,
dass in der der eingeschobenen bzw. zurückgezogenen Ankerposition entsprechenden axialen Position der Ventilschieberbaugruppe diese den Fluidpfad versperrt und in einer aus der eingeschobenen bzw. zurückgezogenen Ankerposition bewegten axialen Position der Ventilschieberbaugruppe diese den Fluidpfad über den fluidleitenden Kanalabschnitt (50) öffnet,
wobei der fluidleitende Kanalabschnitt (50) als Mehrzahl von in einem hohlzylindrischen Bereich des Ventilgehäuses (26) um den Innenumfang bevorzugt gleichmäßig verteilt vorgesehenen Einzelkanalabschnitten ausgebildet ist,
**dadurch gekennzeichnet,**
**dass** die Einzelkanalabschnitte in Richtung auf die Ankermittel
längsschnittlich spitz zulaufend im Ventilgehäuse eingeformt sind.

2. Vorrichtung nach Anspruch 1, **dadurch gekennzeichnet dass**, der mit dem ersten Fluidanschluss (P) verbundene fluidleitende Kanalabschnitt (50) axial in Richtung auf die Ankermittel so profiliert und/oder geschlossen ist, dass die Ventilschieberbaugruppe (28, 50) bei dem Versperren des Fluidpfades dichtend im Ventilgehäuse (26) sitzt und bei der bewegten axialen Position der Ventilschieberbaugruppe diese den fluidleitenden Kanalabschnitt (50) zum zweiten Fluidanschluss (A) freilegen kann.

3. Vorrichtung nach Anspruch 1 oder 2, **dadurch gekennzeichnet, dass** der erste Fluidanschluss (P) stirnseitig des Ventilgehäuses und/oder entlang der axialen Richtung und der zweite Fluidanschluss (A) an einem seitlichen Gehäusebereich, insbesondere Mantelbereich, des Ventilgehäuses (26) so vorgesehen ist, dass der fluidleitende Kanalabschnitt des Ventilgehäuses in der axialen Richtung zwischen dem ersten und dem zweiten Fluidanschluss liegt.

4. Vorrichtung nach einem der Ansprüche 1 bis 3, **gekennzeichnet durch** auf die Ventilschieberbaugruppe (28) und/oder die Ankermittel (14) in die eingeschobene bzw. zurückgezogene Ankerposition rückstellend wirkende Kraftspeichermittel (32), welche insbesondere als Druckfeder ausgebildet sind.

5. Vorrichtung nach Anspruch 4, **dadurch gekennzeichnet, dass** die Kraftspeichermittel stirnseitig und/oder in einem zu den Ankermitteln entgegengesetzten axialen Endbereich (52) der Ventilschieberbaugruppe an diese angreifend vorgesehen sind und sich bevorzugt von einem Abschnitt des Ventilgehäuses abstützen.

6. Vorrichtung nach einem der Ansprüche 1 bis 5, **gekennzeichnet durch** einen im Ventilgehäuse vorgesehenen dritten Fluidanschluss (T), welcher dem zweiten Fluidanschluss (A) in Richtung auf das Aktorgehäuse (10) benachbart vorgesehen und so ausgebildet ist, dass bei der den Fluidpfad zwischen dem ersten und dem zweiten Fluidanschluss sperrenden axialen Position der Ventilschieberbaugruppe diese einen weiteren Fluidpfad vom zweiten zum dritten Fluidanschluss öffnet und/oder freigibt, und der gesperrt wird, wenn der Fluidpfad zwischen dem ersten und dem zweiten Fluidanschluss geöffnet ist.

7. Vorrichtung nach Anspruch 6, **dadurch gekennzeichnet, dass** die Ventilvorrichtung als 3/2-Schalt- oder Proportionalventil ausgebildet ist.

8. Vorrichtung nach einem der Ansprüche 1 bis 7, **dadurch gekennzeichnet, dass** die elektromagnetische Ventilvorrichtung durch axiales Aneinanderfügen des Aktorgehäuses als bauliche Einheit bzw. Modul mit dem die Ventilschieberbaugruppe aufweisenden Ventilgehäuse montierbar ausgestaltet ist.

9. Vorrichtung nach einem der Ansprüche 1 bis 7, **dadurch gekennzeichnet, dass** das Ventilgehäuse oder eine Baugruppe eines mehrteilig ausgeführten Ventilgehäuses einstückig mit einem Spulenträger der stationären Spulenmittel ausgebildet ist.

10. System aufweisend die elektromagnetische Ventilvorrichtung nach einem der Ansprüche 1 bis 9 sowie eine zusätzliche, zum Austauschen gegen die Ventilschieberbaugruppe ausgebildete Ventilschieberbaugruppe und/oder ein zusätzliches, zum Austauschen gegen das Ventilgehäuse ausgebildetes Ventilgehäuse, welches mit einer weiteren Ventilschieberbaugruppe ausgestaltet ist, so dass beim Zusammenwirken der weiteren Ventilschieberbaugruppe mit den Ankermitteln im Ankergehäuse bei der eingeschobenen bzw. zurückgezogenen Ankerposition ein Fluidpfad zwischen dem ersten und dem zweiten Fluidanschluss geöffnet und in der bewegten axialen Position der weiteren Ventilschieberbaugruppe der Fluidpfad zwischen dem ersten und dem zweiten Fluidanschluss versperrt werden kann.

## Claims

1. An electromagnetic valve device comprising armature means (12, 14), which are movable along an axial direction for actuating a valve gate assembly group (28) in reaction to energizing stationary coil means (16), and which are accommodated in an actuator housing (17, 19, 20, 22) preferably as a component unit and/or module in conjunction with the coil means and stationary core means and take up an inserted and/or retracted armature position (Fig. 1) in an unenergized state of the coil means,
said valve gate assembly group (28), which is guided in a valve housing (26), being realized at one axial end for a contacting interaction, which cannot endure tensile load, with the armature means (14) and being realized such that a fluid path from a first fluid port (P) of the valve housing to a second fluid port (A) of the valve housing can be opened or blocked depending on an axial position of the valve gate assembly group,
wherein the valve housing (26) comprises at least one axially fluid-conducting channel section (50) on the interior so as to interact with the valve gate assembly group (28) guided therein, in particular at the axial end side opposite to the armature means, said channel section (50) being realized such that the valve gate assembly group (28) blocks the fluid path in the axial position of the valve gate assembly group corresponding to the inserted or retracted armature position
and the valve gate assembly group (28) opens the fluid path via the flow-conducting channel section (50) in an axial position of the valve gate assembly group moved out of the inserted or retracted armature position, wherein the fluid-conducting channel section (50) is realized as a plurality of individual channel sections preferably evenly dispersed around the inner circumference in a hollow-cylindrical area of the valve housing (26),
**characterized in that**
the individual channel sections are formed into the valve housing in a tapered manner with respect to the longitudinal section in the direction of the armature means.

2. The device according to claim 1, **characterized in that** the fluid-conducting channel section (50) connected to the first fluid port (P) is axially profiled and/or closed such towards the armature means that the valve gate assembly group (28, 50) sits in the valve housing (26) in a sealing manner when blocking the fluid path and the valve gate assembly group can expose the fluid-conducting channel section (50) to the second fluid port (A) in the moved axial position of the valve gate assembly group.

3. The device according to claim 1 or 2, **characterized in that** the first fluid port (P) is disposed at the front side of the valve housing and/or along the axial direction and that the second fluid port (A) is disposed at a lateral housing area, in particular a jacket area, of the valve housing (26) in such a manner in each instance that the fluid-conducting channel section of the valve housing is between the first and the second fluid port in the axial direction.

4. The device according to any one of claims 1 to 3, **characterized by** energy storage means (32), which are realized in particular as compression springs and act on the valve gate assembly group (28) and/or the armature means (14) so as to return these into the inserted and/or retracted armature position.

5. The device according to claim 4, **characterized in that** the energy storage means are disposed at the front side and/or in an axial end area (52) of the valve gate assembly group opposite to the armature means so as to abut against the valve gate assembly group and are preferably supported at a section of the valve housing.

6. The device according to any one of claims 1 to 5, **characterized by** a third fluid port (T) which is disposed in the valve housing, is disposed adjacent to the second fluid port (A) in the direction to the actuator housing (10) and is realized such that the valve gate assembly group (28) opens and/or releases another fluid path from the second to the third fluid port in the axial position of the valve gate assembly group blocking the fluid path between the first and the second fluid port, said other fluid path being blocked if the fluid path between the first and the second fluid port is open.

7. The device according to claim 6, **characterized in that** the valve device is realized as a 3/2 shift valve or proportional valve.

8. The device according to any one of claims 1 to 7, **characterized in that** the electromagnetic valve device is realized so as to be able to be mounted to the valve housing by axially joining the actuator housing as a structural unit or module, said valve housing comprising the valve gate assembly group.

9. The device according to any one of claims 1 to 7, **characterized in that** the valve housing or an assembly group of a multi-piece valve housing is realized in one piece having a coil carrier of the stationary coil means.

10. A system comprising the electromagnetic valve device according to any one of claims 1 to 9 as well as an additional valve gate assembly group realized for being exchanged for the valve gate assembly group and/or an additional valve housing, which is realized for being exchanged for the valve housing and is realized having another valve gate assembly group so that a fluid path between the first and the second fluid path is open when the further valve gate assembly group interacts with the armature means in the armature housing in the inserted or retracted armature position and that the fluid path between the first and the second fluid port can be blocked in the moved axial position of the further valve gate assembly group.

## Revendications

1. Dispositif de soupape électromagnétique comprenant des moyens d'induit (12, 14) déplaçables le long d'une direction axiale pour actionner un ensemble (28) de tiroir de soupape en réponse à une alimentation en courant des moyens de bobine (16) stationnaires,
les moyens d'induit étant logés conjointement avec les moyens de bobine et des moyens de noyau stationnaires dans un boîtier d'actionneur (17, 19, 20, 22), de préférence comme unité structurelle et/ou module, et adoptant une position d'induit rétractée et/ou retirée (Fig. 1) dans un état non alimenté en courant des moyens de bobine,
l'ensemble (28) de tiroir de soupape guidé dans un boîtier de soupape (26) étant réalisé à une extrémité axiale pour interagir avec les moyens d'induit (14) de manière à venir en contact et sans pouvoir être sollicité en traction et de telle manière
qu'en fonction d'une position axiale de l'ensemble de tiroir de soupape, un trajet de fluide d'un premier raccord de fluide (P) du boîtier de soupape à un deuxième raccord de fluide (A) du boîtier de soupape peut être ouvert ou bloqué,
le boîtier de soupape (26) comprenant sur la face interne afin d'interagir avec l'ensemble (28) de tiroir de soupape guidé dans ledit boîtier de soupape, notamment sur le côté de l'extrémité axiale opposé aux moyens d'induit, au moins une partie de canal (50) conduisant le fluide dans la direction axiale, ladite partie de canal étant réalisée de telle manière que l'ensemble de tiroir de soupape bloque le trajet de fluide dans la position axiale de l'ensemble de tiroir de soupape correspondant à la position d'induit rétractée ou retirée
et que l'ensemble de tiroir de soupape ouvre le trajet de fluide via la partie de canal (50) conduisant le fluide dans une position axiale de l'ensemble de tiroir de soupape déplacée de la position d'induit rétractée ou retirée, ,
la partie de canal (50) conduisant le fluide étant réalisée comme pluralité de parties de canal individuelles reparties, de préférence uniformément, sur la circonférence intérieure dans une section du boîtier de soupape (26) en forme de cylindre creux,
**caractérisé en ce que**
les parties de canal individuelles sont formées dans le boîtier de soupape de manière conique par rapport à la section longitudinale dans la direction des moyens d'induit.

2. Dispositif selon la revendication 1, **caractérisé en ce que** la partie de canal (50) conduisant le fluide et reliée au premier raccord de fluide (P) est profilée et/ou fermée dans la direction axiale vers les moyens d'induit de telle manière que l'ensemble (28, 50) de tiroir de soupape est fixé de manière étanche dans le boîtier de soupape (26) quand le trajet de fluide est bloqué et que l'ensemble de tiroir de soupape peut libérer la partie de canal (50) conduisant le fluide vers le deuxième raccord de fluide (A) dans la position axiale déplacée dudit ensemble de tiroir de soupape.

3. Dispositif selon la revendication 1 ou la revendication 2, **caractérisé en ce que** le premier raccord de fluide (P) est prévu sur la face frontale du boîtier de soupape et/ou le long de la direction axiale et le deuxième raccord de fluide (A) est prévu sur une zone latérale de boîtier, notamment une zone d'enveloppe, du boîtier de soupape (26) de telle manière que la partie de canal conduisant le fluide du boîtier de soupape est logée entre le premier et le deuxième raccord de fluide dans la direction axiale.

4. Dispositif selon l'une quelconque des revendications 1 à 3, **caractérisé par** des moyens (32) d'accumulation de force qui sont notamment réalisés comme ressort de pression et qui agissent sur l'ensemble (28) de tiroir de soupape et/ou les moyens d'induit (14) de manière à rappeler ledit ensemble (28) de tiroir de soupape et/ou lesdits moyens d'induit (14) dans la position d'induit rétractée ou retirée.

5. Dispositif selon la revendication 4, **caractérisé en ce que** les moyens d'accumulation de force sont prévus sur la face frontale et/ou dans une partie d'extrémité (52) axiale de l'ensemble de tiroir de soupape qui est opposée aux moyens d'induit de manière à appuyer contre ledit ensemble de tiroir de soupape et sont, de préférence, supportés par une partie du boîtier de soupape.

6. Dispositif selon l'une quelconque des revendications 1 à 5, **caractérisé par** un troisième raccord de fluide (T) prévu dans le boîtier de soupape qui est adjacent au deuxième raccord de fluide (A) dans la direction du boîtier d'actionneur (10) et qui est réalisé de telle manière que l'ensemble de tiroir de soupape ouvre et/ou libère un autre trajet de fluide du deuxième au troisième raccord de fluide dans la position axiale de l'ensemble de tiroir de soupape qui bloque le trajet de fluide entre le premier et le deuxième raccord de fluide, ledit autre trajet de fluide étant bloqué quand le trajet de fluide entre le premier et le deuxième raccord de fluide est ouvert.

7. Dispositif selon la revendication 6, **caractérisé en ce que** le dispositif de soupape est réalisé comme soupape de commutation à 3/2 voies ou soupape proportionnelle.

8. Dispositif selon l'une quelconque des revendications 1 à 7, **caractérisé en ce que** le dispositif de soupape électromagnétique est réalisé de manière à pouvoir être monté au boîtier de soupape par l'assemblage axial du boîtier d'actionneur comme unité structurelle ou module, ledit boîtier de soupape comprenant l'ensemble de tiroir de soupape.

9. Dispositif selon l'une quelconque des revendications 1 à 7, **caractérisé en ce que** le boîtier de soupape ou un ensemble d'un boîtier de soupape réalisé en plusieurs pièces est réalisé en une pièce ayant un support de bobine des moyens de bobine stationnaires.

10. Système comprenant le dispositif de soupape électromagnétique selon l'une quelconque des revendications 1 à 9 et un autre ensemble de tiroir de soupape réalisé pour être échangé contre l'ensemble de tiroir de soupape et/ou un autre boîtier de soupape réalisé pour être échangé contre le boîtier de soupape qui a un autre ensemble de tiroir de soupape, de sorte que, quand l'autre ensemble de tiroir de soupape interagit avec les moyens d'induit dans le boîtier de soupape, dans la position d'induit rétractée ou retirée, un trajet de fluide entre le premier et le deuxième raccord de fluide peut être ouvert et, dans la position axiale déplacée de l'autre ensemble de tiroir de soupape, le trajet de fluide entre le premier et le deuxième raccord de fluide peut être bloqué.
